# EUROPÄISCHE PATENTANMELDUNG

(11) **EP 2 320 101 A1**
(43) Veröffentlichungstag der Anmeldung: **11.05.2011**
(21) Anmeldenummer: 10013370.1
(22) Anmeldetag: 06.10.2010
(51) Int. Cl.: F16C 29/00

(54) **Führungsprofil und Linearmotorantriebseinrichtung**

(30) Priorität: 10.11.2009 DE 102009053568
(71) Anmelder: GAS - Automation GmbH, 78112 St. Georgen (DE)
(72) Erfinder: Goedecke, Wolf-Dieter, Prof. Dr.-Ing., 78112 St. Georgen (DE); Huber, Ralf, 78086 Brigachtal (DE); Borowski, Alexander, 78465 Konstanz (DE)
(74) Vertreter: Thielking, Klaus

(57) **Zusammenfassung**

Die Erfindung betrifft ein Führungsprofil (10) für einen Linearantrieb, wobei sich das Führungsprofil entlang einer Längsachse (12) erstreckt, mit einem aus einem faserverstärkten Kunststoff hergestellten Mantelelement (18), welches eine Außenseite (22) des Führungsprofils (10) bildet und mit einer Innenseite (24) einen Hohlraum (26) begrenzt, und mit mindestens einer aus einem faserverstärkten Kunststoff hergestellten Verstärkungsstruktur (20), welche in dem Hohlraum (26) angeordnet ist, wobei die Verstärkungsstruktur (20) mit voneinander abgewandten Außenflächen (42,44) an einander gegenüberliegenden Innenflächen (34,36) der Innenseite (24) des Mantelelements (18) anliegt.

## Beschreibung

Die Erfindung betrifft ein Führungsprofil für einen Linearantrieb, wobei sich das Führungsprofil entlang einer Längsachse erstreckt, mit einem aus einem faserverstärkten Kunststoff hergestellten Mantelelement, welches eine Außenseite des Führungsprofils bildet und mit einer Innenseite einen Hohlraum begrenzt, und mit mindestens einer aus einem faserverstärkten Kunststoff hergestellten Verstärkungsstruktur, welche in dem Hohlraum angeordnet ist.

Ein solches Führungsprofil ist aus der DE 34 36 977 C2 bekannt. Mit einem solchen Führungsprofil wird im Vergleich zu einem aus einem metallischen Material hergestellten und insbesondere massiven Führungsprofil ein deutlicher Gewichtsvorteil bei guter Formstabilität erreicht. Dennoch besteht Bedarf, ein Führungsprofil zu schaffen, welches ein weiter verbessertes Verhältnis von Gewicht und Formstabilität aufweist.

Hiervon ausgehend liegt der Erfindung die Aufgabe zugrunde, ein Führungsprofil der eingangs genannten Art so zu verbessern, dass es möglichst leicht und gleichzeitig formstabil ist.

Diese Aufgabe wird bei einem Führungsprofil der eingangs genannten Art erfindungsgemäß dadurch gelöst, dass die Verstärkungsstruktur mit voneinander abgewandten Außenflächen an einander gegenüberliegenden Innenflächen der Innenseite des Mantelelements anliegt.

Hierbei sind die Abmessungen des Hohlraums und die Abmessungen der Verstärkungsstruktur so aufeinander abgestimmt, dass die Verstärkungsstruktur mit voneinander abgewandten Außenflächen an einander gegenüberliegenden Innenflächen der Innenseite des Mantelelements anliegt. Hierdurch kann ein Führungsprofil mit einem besonders hohen Flächenträgheitsmoment bereitgestellt werden, welches leicht ist und eine sehr gute Formstabilität aufweist. Dies gilt insbesondere, wenn das Mantelelement und/oder die Verstärkungsstruktur aus einem kohlenstofffaserverstärkten Kunststoff (CFK) hergestellt sind.

Darüber hinaus ermöglicht es das erfindungsgemäße Führungsprofil, die Verstärkungsstruktur besonders einfach in dem Hohlraum des Mantelelements zu positionieren. Durch die Anlage der Außenflächen der Verstärkungsstruktur an den Innenflächen des Mantelelements ist die Position und Lage der Verstärkungsstruktur innerhalb des Mantelelements vordefiniert. Hierdurch ergibt sich eine besonders einfache Herstellbarkeit des Führungsprofils.

Besonders bevorzugt ist es, wenn die Verstärkungsstruktur Teilhohlräume aufweist, welche sich parallel zu der Längsachse des Führungsprofils erstrecken. Hierdurch kann eine stabile Struktur geschaffen werden, welche es außerdem ermöglicht, die Teilhohlräume zur Anordnung weiterer Bauteile oder versteifender Materialien zu nutzen.

So ist es bevorzugt, wenn zumindest eine Teilmenge der Teilhohlräume mit einem Schaummaterial gefüllt ist. Hierdurch kann die Biegesteifigkeit des Führungsprofils weiter verbessert werden, insbesondere wenn es sich bei dem Schaummaterial um einen Metallschaum handelt, beispielsweise aus Aluminium.

Nach einer Weiterbildung der Erfindung ist die Verstärkungsstruktur fachwerkartig ausgebildet, so dass eine Erhöhung des Flächenträgheitsmoments in zueinander senkrechten Richtungen erreicht werden kann.

Besonders bevorzugt ist es, wenn die Verstärkungsstruktur eine Mehrzahl von aneinander anliegenden Verstärkungselementen umfasst. Dies ermöglicht die Herstellung einer besonders einfach aufgebauten Verstärkungsstruktur, welche sich modulartig aus mehreren Verstärkungselementen zusammensetzt.

Besonders bevorzugt ist es, wenn die Verstärkungselemente identische oder zumindest annähernd identische Abmessungen aufweisen, wodurch eine schnelle, einfache und wirtschaftliche Fertigung des Führungsprofils ermöglicht wird.

Nach einer Ausführungsform der Erfindung sind die Verstärkungselemente als Hohlprofile ausgebildet. Diese Hohlprofile bilden die Teilhohlräume der Verstärkungsstruktur und können, wie vorstehend geschrieben, zur Anordnung weiterer Bauteile dienen oder mit einem Füllmaterial ausgefüllt sein.

Bevorzugt ist es, wenn die Verstärkungselemente im Querschnitt mehreckig sind und zumindest einen ebenen Wandabschnitt aufweisen. Beispielsweise sind viereckige Verstärkungselemente vorgesehen, welche vier zueinander winklig angeordnete Wandabschnitte aufweisen. Ein ebener Wandabschnitt dient als Anlagefläche für den ebenen Wandabschnitt eines weiteren Verstärkungselements und/oder zur Anlage an einer der Innenflächen des Mantelelements.

Bei einer weiteren Ausführungsform der Erfindung ist vorgesehen, dass, bezogen auf die Längsachse des Führungsprofils, an zumindest einem Ende des Führungsprofils ein Abschlusselement angeordnet ist. Das Abschlusselement dient beispielsweise dazu, den Hohlraum des Mantelelements stirnseitig zu verschließen und/oder dazu, im Bereich eines Endes des Führungsprofils weitere Bauteile anordnen zu können.

Um ein Abschlusselement mit dem Führungsprofil zu verbinden, wird eine Verbindungseinrichtung vorgeschlagen, die mindestens ein erstes Verbindungselement aufweist, welches mit dem Abschlusselement zusammenwirkt und sich parallel oder zumindest annähernd parallel zu der Längsachse des Führungsprofils erstreckt, und mindestens ein mit dem ersten Verbindungselement verbundenes zweites Verbindungselement aufweist, welches sich quer zu der Längsachse des Führungsprofils erstreckt und das Führungsprofil zumindest abschnittsweise durchsetzt. Auf diese Weise können Kräfte, die in Längsrichtung des Führungsprofils auf das Abschlusselement wirken, über die ersten Verbindungselemente in die zweiten Verbindungselemente eingeleitet werden, welche ihrerseits auf die Struktur des Profilelements, also auf das Mantelelement und/oder auf die Verstärkungsstruktur, übertragen werden. Dies ermöglicht eine besonders zuverlässige Fixierung des Abschlusselements an dem Führungsprofil.

Bei einer weiteren Ausführungsform der Erfindung ist vorgesehen, dass an dem Abschlusselement eine parallel oder zumindest annähernd parallel zur Längsachse des Führungsprofils wirksame Stoßdämpfereinrichtung fixiert ist. Diese ermöglicht es, einen an dem Führungsprofil geführten Schlitten am Ende einer Bewegungsbahn abbremsen zu können. In Verbindung mit der vorstehend beschriebenen Verbindungseinrichtung können die durch das Abbremsen des Schlittens erzeugten Kräfte besonders gut in das Führungsprofil eingeleitet werden.

Das erfindungsgemäße Führungsprofil eignet sich für Linearantriebe unterschiedlichster Bauarten, beispielsweise pneumatische und/oder hydraulische Linearantriebe. Bei einer bevorzugten Ausführungsform ist es jedoch vorgesehen, dass das Führungsprofil mit einem Primärteil oder einem Sekundärteil einer Linearmotorantriebseinrichtung verbunden ist, so dass diese infolge des niedrigen Gewichts und der hohen Formstabilität des Führungsprofils besonders leistungsfähig ist.

Die Erfindung betrifft ferner eine Linearmotorantriebseinrichtung, umfassend ein vorstehend beschriebenes Führungsprofil, einen Primärteil und einen Sekundärteil, wobei der Primärteil oder der Sekundärteil mit dem Führungsprofil verbunden ist.

Vorteile und Ausgestaltungen der erfindungsgemäßen Linearmotorantriebseinrichtung sind zum Teil bereits vorstehend im Zusammenhang mit den Vorteilen und Ausgestaltungen des erfindungsgemäßen Führungsprofils erläutert worden. Daher wird im Folgenden lediglich auf jene Vorteile und Ausgestaltungen der erfindungsgemäßen Linearmotorantriebseinrichtung eingegangen, welche nicht bereits vorstehend im Zusammenhang mit den Vorteilen und Ausgestaltungen des erfindungsgemäßen Führungsprofils erläutert worden sind.

Insbesondere umfasst die Linearmotorantriebseinrichtung einen an dem Führungsprofil geführten Schlitten, der zur Anordnung des Sekundärteils oder des Primärteils dient, welcher mit dem Primärteil bzw. dem Sekundärteil zusammenwirkt, der mit dem Führungsprofil verbunden ist.

Bei einer bevorzugten Ausführungsform ist vorgesehen, dass der Schlitten einen aus einem faserverstärkten Kunststoff hergestellten Schlittenkörper umfasst. Insbesondere handelt es sich beim dem faserverstärkten Kunststoff um einen kohlenstofffaserverstärkten Kunststoff. Dieses Material ermöglicht die Herstellung eines besonders leichten und dabei verwindungssteifen Schlittens, welcher sich mit niedrigen Antriebskräften beschleunigen und abbremsen lässt.

Nach einer weiteren Ausführungsform der Linearmotorantriebseinrichtung ist vorgesehen, dass das Führungsprofil zumindest entlang eines Teils seiner Erstreckung entlang der Längsachse von einem quer zu der Längsachse wirksamen Abstützelement abgestützt ist. Auf diese Weise wird ein Verbund aus Abstützelement und Führungsprofil erzeugt, welches besonders biegesteif ist. Alternativ hierzu ist das Führungsprofil freitragend angeordnet, was insbesondere bei Verwendung eines Schlittens vorteilhaft ist, welcher das Führungsprofil ringförmig umschließt.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Figur 1: eine perspektivische Ansicht einer Ausführungsform eines Führungsprofils;
- Figur 2: eine vergrößerte Ansicht eines in Figur 1 mit II bezeichneten Endes des Führungsprofils;
- Figur 3 bis 5: perspektivische Ansichten weiterer Ausführungsformen eines Führungsprofils;
- Figur 6: eine perspektivische Ansicht einer Ausführungsform einer Linearmotorantriebseinrichtung;
- Figur 7: eine perspektivische Ansicht einer weiteren Ausführungsform einer Linearmotorantriebseinrichtung;
- Figur 8: eine perspektivische Ansicht einer weiteren Ausführungsform eines Führungsprofils und eines Abschlusselements;
- Figur 9: eine perspektivische Ansicht einer weiteren Ausführungsform eines Führungsprofils, eines Abschlusselements und einer Verbindungseinrichtung zur Verbindung des Abschlusselements mit dem Führungsprofil; und
- Figur 10: eine perspektivische Ansicht einer weiteren Ausführungsform einer Linearmotorantriebseinrichtung.

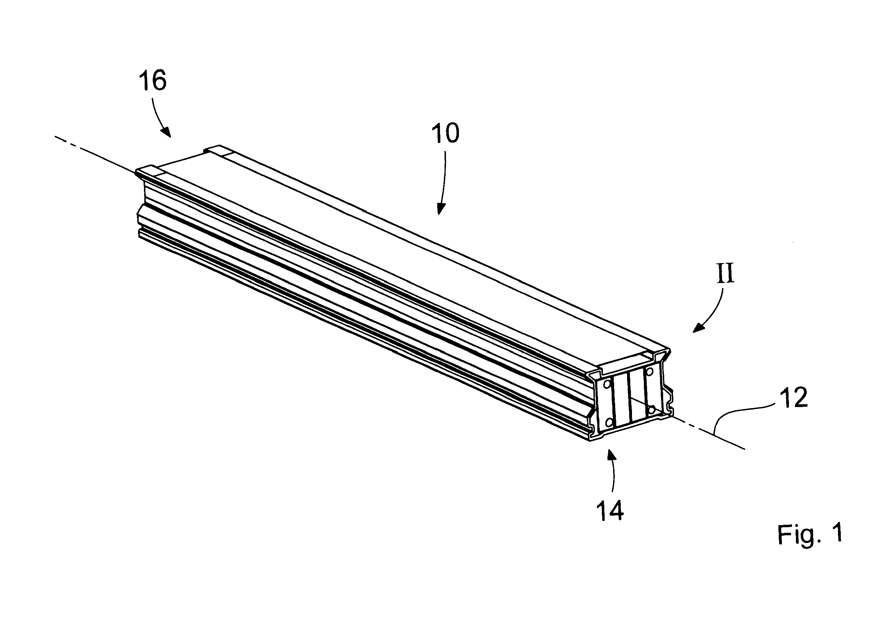

Eine Ausführungsform eines Führungsprofils ist in Figur 1 perspektivisch dargestellt und insgesamt mit dem Bezugszeichen 10 bezeichnet. Das Führungsprofil 10 erstreckt sich entlang einer Längsachse 12 zwischen einem ersten Ende 14 und einem zweiten Ende 16.

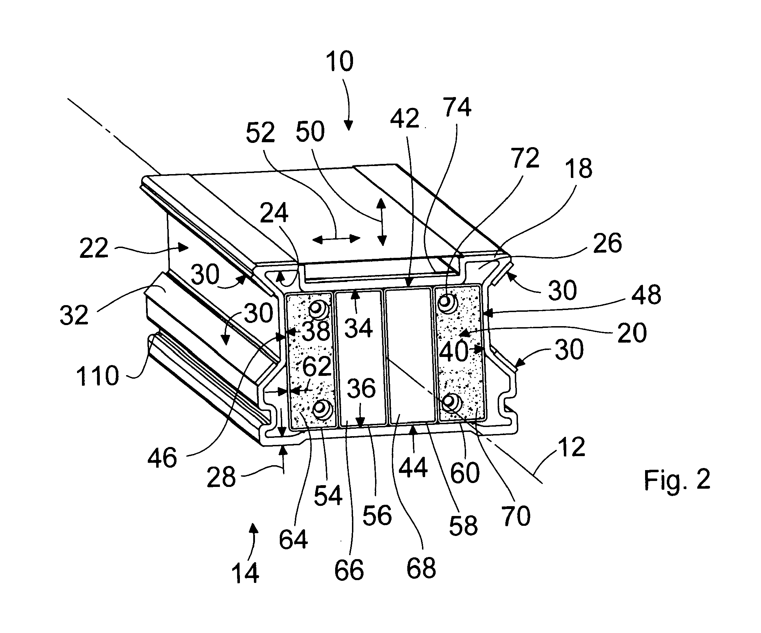

Das Führungsprofil 10 weist ein Mantelelement 18 und eine Verstärkungsstruktur 20 auf (vergleiche Figur 2). Das Mantelelement 18 bildet eine Außenseite 22 des Führungsprofils 10 und begrenzt mit seiner Innenseite 24 einen Hohlraum 26.

Das Mantelelement 18 ist aus einem faserverstärkten Kunststoff, insbesondere aus einem kohlenstofffaserverstärkten Kunststoff, hergestellt. Eine Wandstärke 28 des Mantelelements 18 beträgt beispielsweise zwischen ungefähr 1 mm und ungefähr 5 mm.

An der Außenseite des Mantelelements 18 sind insgesamt vier Laufflächen 30 vorgesehen, welche sich parallel zu der Längsachse 12 erstrecken und relativ zueinander in x-förmiger Lage angeordnet sind. Die Laufflächen 30 sind beispielsweise mittels Stahlleisten 32 gebildet. Die Stahlleisten 32 sind beispielsweise mit dem Mantelelement 18 verklebt; oder die Stahlleisten 32 werden bei der Herstellung des Mantelelements 18 mit in dessen Material eingeformt.

Die Innenseite 24 des Mantelelements 18 weist mehrere, ineinander übergehende Innenflächen auf. Insbesondere umfasst die Innenseite 24 mindestens zwei einander gegenüberliegende, insbesondere zueinander parallele, Innenflächen 34 und 36 auf. Ferner weist das Mantelelement 18 sich winklig, insbesondere senkrecht zu den Innenflächen 34 und 36 erstreckende Innenflächen 38 und 40 auf, welche ebenfalls einander gegenüberliegen und insbesondere zueinander parallel sind.

Die in dem Hohlraum 26 des Mantelelements 18 angeordnete Verstärkungsstruktur 20 weist voneinander abgewandte Außenflächen 42 und 44 auf, die jeweils an einer der Innenflächen 34 und 36 anliegen.

Ferner umfasst die Verstärkungsstruktur 20 voneinander abgewandte Außenflächen 46 und 48, welche quer, insbesondere senkrecht, zu den Außenflächen 42 und 44 verlaufen. Die Außenflächen 46 und 48 liegen jeweils an einer der Innenflächen 38 und 40 des Mantelelements 18 an.

Die Verstärkungsstruktur 20 bildet ein Fachwerk, welches in zueinander senkrechten Richtungen 50 und 52 wirksam ist, welche ihrerseits jeweils senkrecht zu der Längsachse 12 verlaufen.

Die Verstärkungsstruktur 20 weist eine Mehrzahl von Verstärkungselementen auf, welche sich parallel zu der Längsachse 12 erstrecken. Die Verstärkungselemente sind in dem in Figur 2 dargestellten Beispiel mit 54, 56, 58 und 60 bezeichnet. Die Verstärkungselemente 54 bis 60 liegen aneinander an und sind vorzugsweise identisch zueinander ausgebildet. Jedes der Verstärkungselemente 54 ist beispielsweise im Querschnitt rechteckig, als Hohlprofil ausgebildet und aus einem faserverstärkten Kunststoff hergestellt, insbesondere aus einem kohlenstofffaserverstärkten Kunststoff. Eine Wandstärke 62 eines Verstärkungselements 54 beträgt beispielsweise zwischen ungefähr 1 mm und ungefähr 5 mm.

Jedes der Verstärkungselemente 54 bis 60 begrenzt seinerseits einen Teilhohlraum. Diese Teilhohlräume sind in der Zeichnung mit dem Bezugszeichen 64, 66, 68 und 70 bezeichnet. Vorzugsweise sind die Teilhohlräume 64 bis 70 mit einem Schaummaterial, insbesondere mit einem Metallschaum, gefüllt, beispielsweise mit einem Aluminium-Metallschaum. Beispielsweise sind die Verstärkungselemente 54 und 60 mit Metallschaum gefüllt, welcher in Figur 2 gepunktet angedeutet ist. In dem Schaummaterial sind Bohrungen 72 vorgesehen, deren Funktion weiter unten noch erläutert wird.

Ferner umfasst das Führungsprofil 10 einen Aufnahmeabschnitt 74, welcher beispielsweise rinnenförmig ausgebildet ist und insbesondere zur Aufnahme eines Primärteils oder eines Sekundärteils einer nachstehend beschriebenen Linearmotorantriebseinrichtung dient.

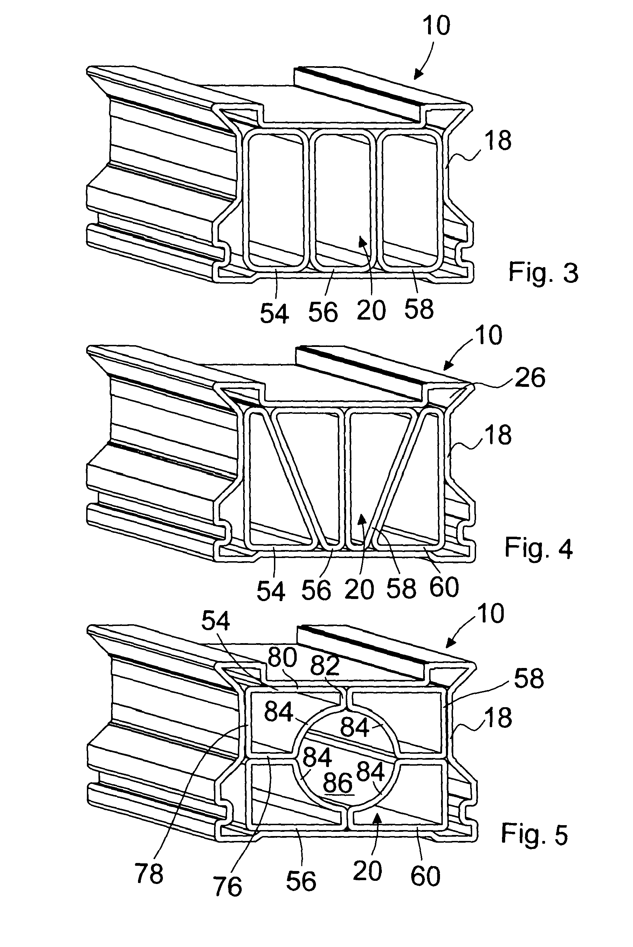

In den Figuren 3 bis 5 sind weitere Ausführungsformen von Führungsprofilen 10 dargestellt, die ebenfalls ein Mantelelement 18 und eine Verstärkungsstruktur 20 aufweisen.

Bei der Verstärkungsstruktur gemäß Figur 3 sind drei Verstärkungselemente 54, 56 und 58 vorgesehen, welche im Wesentlichen ein rechteckiges Profil mit abgerundeten Ecken aufweisen.

Bei der in Figur 4 dargestellten Verstärkungsstruktur 20 sind vier Verstärkungselemente 54, 56, 58 und 60 vorgesehen, welche einen dreieckigen Querschnitt aufweisen und jeweils paarweise miteinander gefügt sind, so dass ein Paar von Verstärkungselementen 54 und 60 beziehungsweise 58 und 60 jeweils die Hälfte des Querschnitts der Verstärkungsstruktur 20 bildet.

Bei der in Figur 5 dargestellten Verstärkungsstruktur 20 sind vier Verstärkungselemente 54, 56, 58 und 60 vorgesehen, welche jeweils in einem Eckbereich des Hohlraums 26 angeordnet sind. Die Verstärkungselemente 54 bis 60 sind im Querschnitt viereckig und weisen jeweils vier ebene Wandabschnitte 76, 78, 80 und 82 auf, sowie ferner einen gekrümmten Wandabschnitt 84. Die gekrümmten Wandabschnitte unterschiedlicher Verstärkungselemente 54 bis 60 begrenzen gemeinsam einen im Querschnitt zylindrischen Teilhohlraum 86. Der Teilhohlraum 86 kann beispielsweise genutzt werden, um ein Kolbenrohr eines pneumatischen oder hydraulischen Antriebs innerhalb des Führungsprofils 10 anzuordnen.

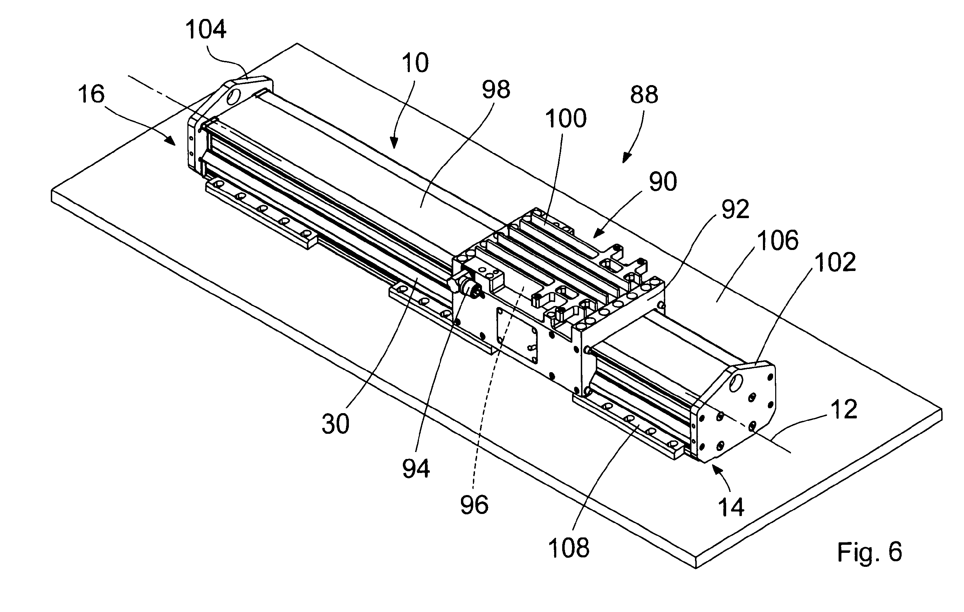

In Figur 6 ist eine Ausführungsform einer Linearmotorantriebseinrichtung 88 dargestellt. Diese umfasst ein vorstehend unter Bezugnahme auf die Figuren 1 bis 5 beschriebenes Führungsprofil 10. Die Linearmotorantriebseinrichtung 88 umfasst einen Schlitten 90, welcher einen Schlittenkörper 92 aufweist, der an den Laufflächen 30 des Führungsprofils 10 geführt ist.

Der Schlittenkörper 92 ist insbesondere aus einem kohlenstofffaserverstärkten Kunststoff hergestellt. Der Schlitten 90 weist einen elektrischen Anschluss 94 für einen in dem Schlittenkörper 92 angeordneten Primärteil 96 auf. Ein Sekundärteil 98 ist mit dem Führungsprofil 10 verbunden und in dem Aufnahmeabschnitt 74 (vergleiche Figur 2) angeordnet.

Durch eine Bestromung des Primärteils 96 entsteht Wärme, welche mittels Kühlrippen 100 abführbar ist. Die Kühlrippen 100 bestehen beispielsweise aus Aluminium.

An den Enden 14 und 16 des Führungsprofils 10 sind Abschlusselemente 102 und 104 vorgesehen. Diese begrenzen den Verfahrweg des Schlittens 90 entlang der Längsachse 12.

Bei der in Figur 6 dargestellten Ausführungsform ist der Schlitten 90 U-förmig ausgebildet. Das Führungsprofil 10 ist mit einem Abstützelement 106 verbunden, und zwar mittels Pratzen 108, welche mit dem Abstützelement 106 verschraubt sind und in eine Nut 110 (vergleiche Figur 2) an der Außenseite 22 des Mantelelements 18 eingreifen.

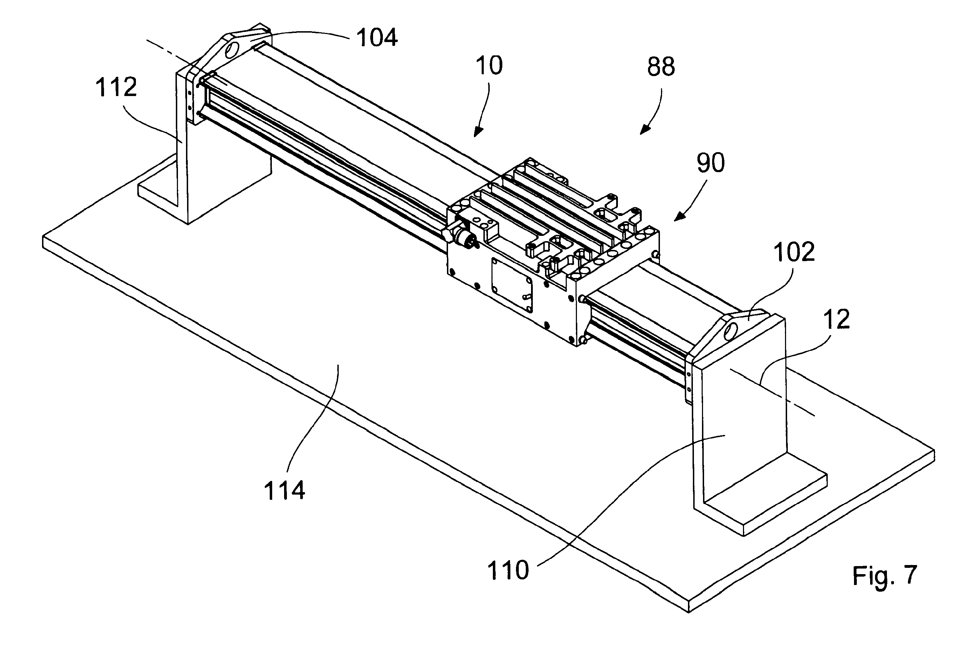

Bei dem in Figur 7 dargestellten Ausführungsbeispiel einer Linearmotorantriebseinrichtung 88 ist das Führungsprofil 10 freitragend angeordnet. Hierfür sind die Abschlusselemente 102 und 104 mit Halterungen 110 beziehungsweise 112 verbunden, welche ihrerseits an einem Trägerteil 114 befestigt ist. Bei der in Figur 7 dargestellten, freitragenden Anordnung des Führungsprofils 10 ist es bevorzugt, wenn der Schlitten 90 das Führungsprofil 10 ringförmig umschließt.

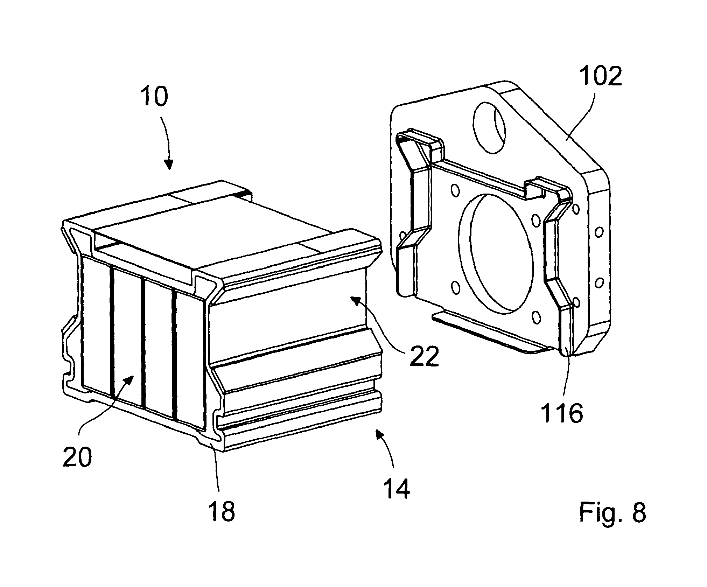

In Figur 8 ist ein Abschlusselement 102 dargestellt, welches mit einem Ende 14 eines Führungsprofils 10 verbindbar ist. Das Abschlusselemente 102 ist plattenförmig ausgebildet und umfasst mindestens einen Führungsabschnitt 116, welcher auf einer dem Ende 14 des Führungsprofils 10 zugewandten Seite des Abschlusselements 102 angeordnet ist. Der Führungsabschnitt 116 ist in seinem Verlauf dem Verlauf der Außenseite 22 des Mantelelements 18 angepasst, so dass das Abschlusselement 102 und das Mantelelement 18 exakt miteinander gefügt werden können. Hierbei wird der Führungsabschnitt 116 auf die Außenseite 22 des Mantelelements 18 aufgeschoben.

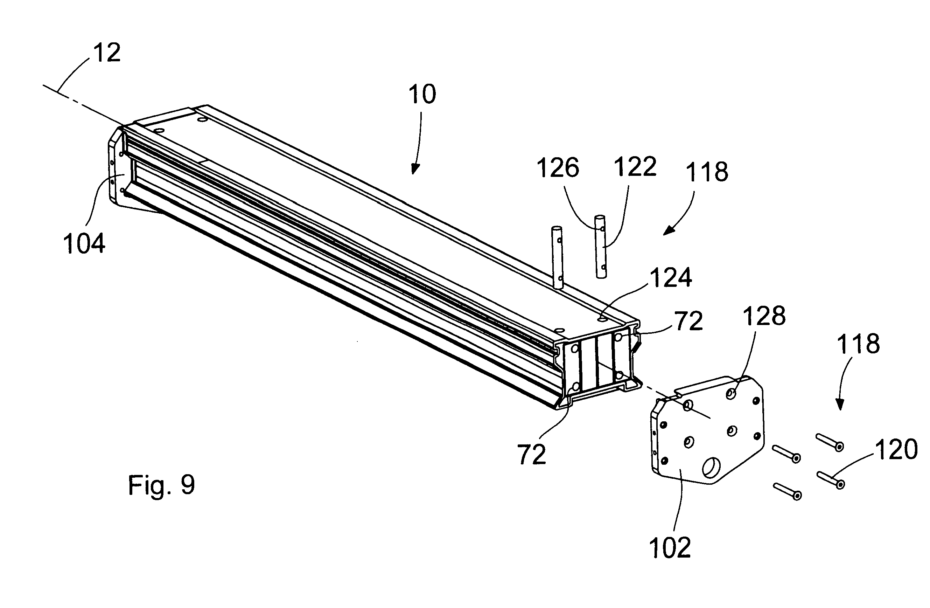

Zur Verbindung des Abschlusselements 102 mit dem Führungsprofil 10 ist eine (in Figur 9 dargestellte) Verbindungseinrichtung 118 vorgesehen. Die Verbindungseinrichtung 118 umfasst erste Verbindungselemente 120, welche beispielsweise in Form von Schrauben ausgebildet sind. Die ersten Verbindungselemente 120 erstrecken sich parallel zu der Längsachse 12 des Führungsprofils 10.

Die Verbindungseinrichtung 118 umfasst ferner zweite Verbindungselemente 122, welche sich quer zu der Längsachse 12 erstrecken und das Führungsprofil 10 durchsetzen. Hierfür weist das Führungsprofil 10 in dem Mantelelement 118 und in der Verstärkungsstruktur 20 Aussparungen 124 auf, welche zur Aufnahme der zweiten Verbindungselemente 122 dienen. Die zweiten Verbindungselemente 122 umfassen insbesondere Innengewinde 126 mit zu der Längsachse 12 parallelen Gewindeachsen.

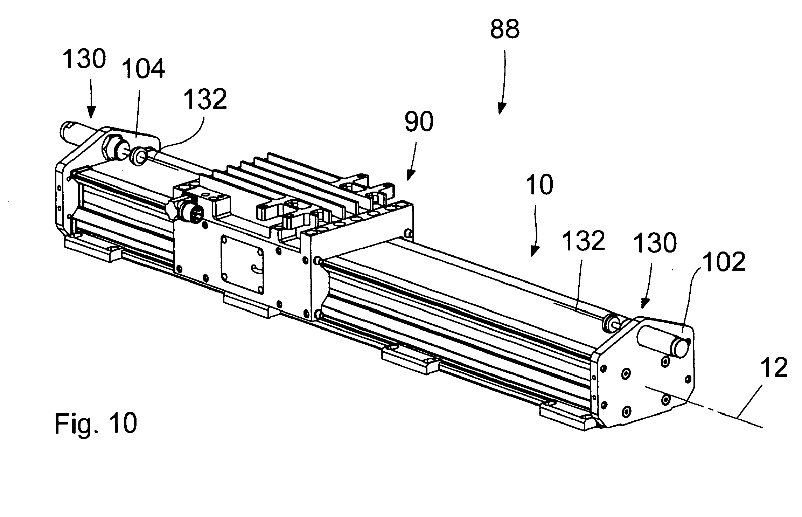

Die Abschlusselemente 102 weisen Durchgangsöffnungen 128 auf, welche von den ersten Verbindungselementen 120 durchsetzbar sind. Die ersten Verbindungselemente 120 durchsetzen im montierten Zustand des Abschlusselements 102 die Durchgangsöffnungen 128 sowie die Bohrungen 72 eines Schaummaterials und werden mit den Innengewinden 126 der zweiten Verbindungselemente 122 verschraubt. Die Verbindungseinrichtung 118 ermöglicht eine besonders sichere Befestigung eines Abschlusselements 102 beziehungsweise 104 an dem Führungsprofil 10. Dies ist insbesondere dann von Vorteil, wenn, wie in Figur 10 dargestellt, an den Abschlusselementen 102 Stoßdämpfereinrichtungen 130 angeordnet sind. Die Stoßdämpfereinrichtungen 130 sind jeweils entlang einer Wirkachse 132 wirksam, welche parallel zu der Längsachse 12 des Führungsprofils 10 verläuft. Auf diese Weise kann der Verfahrweg des Schlittens 90 begrenzt und die Bewegung des Schlittens 90 am Ende des Verfahrwegs abgebremst werden. Hierdurch können bei einer Fehlsteuerung der Linearmotorantriebseinrichtung 88 Schäden verhindert oder zumindest abgemildert werden.

Falls es, beispielsweise für die Wartung des Schlittens 90, erforderlich sein sollte, diesen von dem Führungsprofil 10 zu trennen, kann die Verbindungseinrichtung 118 gelöst werden, so dass ein Abschlusselement 102 oder 104 von dem Führungsprofil 10 entfernt werden kann und der Schlitten von dem Führungsprofil 10 abgenommen werden kann.

## Patentansprüche

1. Führungsprofil (10) für einen Linearantrieb, wobei sich das Führungsprofil (10) entlang einer Längsachse (12) erstreckt, mit einem aus einem faserverstärkten Kunststoff hergestellten Mantelelement (18), welches eine Außenseite (22) des Führungsprofils (10) bildet und mit einer Innenseite (24) einen Hohlraum (26) begrenzt, und mit mindestens einer aus einem faserverstärkten Kunststoff hergestellten Verstärkungsstruktur (20), welche in dem Hohlraum (26) angeordnet ist, **dadurch gekennzeichnet, dass** die Verstärkungsstruktur (20) mit voneinander abgewandten Außenflächen (42, 44) an einander gegenüberliegenden Innenflächen (34, 36) der Innenseite (24) des Mantelelements (18) anliegt.

2. Führungsprofil (10) nach Anspruch 1, **dadurch gekennzeichnet, dass** die Verstärkungsstruktur Teilhohlräume (64, 66, 68, 70) aufweist, welche sich parallel zu der Längsachse (12) erstrecken.

3. Führungsprofil (10) nach Anspruch 2, **dadurch gekennzeichnet, dass** zumindest eine Teilmenge der Teilhohlräume (64, 66, 68, 70) mit einem Schaummaterial gefüllt ist.

4. Führungsprofil (10) nach einem der voranstehenden Ansprüche, **dadurch gekennzeichnet, dass** die Verstärkungsstruktur (20) fachwerkartig ausgebildet ist.

5. Führungsprofil (10) nach einem der voranstehenden Ansprüche, **dadurch gekennzeichnet, dass** die Verstärkungsstruktur (20) eine Mehrzahl von aneinander
anliegenden Verstärkungselementen (54, 56, 58, 60) umfasst.

6. Führungsprofil (10) nach Anspruch 5, **dadurch gekennzeichnet, dass** die Verstärkungselemente (54, 56, 58, 60) identische oder zumindest annähernd identische Abmessungen aufweisen.

7. Führungsprofil (10) nach Anspruch 5 oder 6, **dadurch gekennzeichnet, dass** die Verstärkungselemente (54, 56, 58, 60) als Hohlprofile ausgebildet sind.

8. Führungsprofil (10) nach einem der Ansprüche 5 bis 7, **dadurch gekennzeichnet, dass** die Verstärkungselemente (54, 56, 58, 60) im Querschnitt mehreckig sind und zumindest einen ebenen Wandabschnitt (76, 78, 80, 82) aufweisen.

9. Führungsprofil (10) nach einem der voranstehenden Ansprüche, **dadurch gekennzeichnet, dass**, bezogen auf die Längsachse des Führungsprofils (10), an zumindest einem Ende (14, 16) des Führungsprofils (10) ein Abschlusselement (102, 104) angeordnet ist.

10. Führungsprofil (10) nach Anspruch 9, **dadurch gekennzeichnet, dass** das Abschlusselement (102, 104) mittels einer Verbindungseinrichtung (118) mit dem Führungsprofil (10) verbunden ist, wobei die Verbindungseinrichtung (118) mindestens ein erstes Verbindungselement (120) aufweist, welches mit dem Abschlusselement (102, 104) zusammenwirkt und sich parallel oder zumindest annähernd parallel zu der Längsachse (12) des Führungsprofils (10) erstreckt, und mindestens ein mit dem ersten Verbindungselement (120) verbundenes zweites Verbindungselement (122), welches sich quer zu der Längsachse (12) des Führungsprofils (10) erstreckt und das Führungsprofil (10) zumindest abschnittsweise durchsetzt.

11. Führungsprofil (10) nach Anspruch 9 oder 10, **dadurch gekennzeichnet, dass** an dem Abschlusselement (102, 104) eine parallel oder zumindest annähernd parallel zur Längsachse (12) des Führungsprofils (10) wirksame Stoßdämpfereinrichtung (130) fixiert ist.

12. Führungsprofil (10) nach einem der voranstehenden Ansprüche, **dadurch gekennzeichnet, dass** das Führungsprofil mit einem Primärteil (96) oder einem Sekundärteil (98) einer Linearmotorantriebseinrichtung (88) verbunden ist.

13. Linearmotorantriebseinrichtung (88), umfassend ein Führungsprofil (10) nach einem der Ansprüche 1 bis 11, einen Primärteil (96) und einen Sekundärteil (98), wobei der Primärteil (96) oder der Sekundärteil (98) mit dem Führungsprofil (10) verbunden ist.

14. Linearmotorantriebseinrichtung (88) nach Anspruch 13, umfassend einen an dem Führungsprofil (10) geführten Schlitten (90) .

15. Linearmotorantriebseinrichtung (88) nach Anspruch 13 oder 14, **dadurch gekennzeichnet, dass** der Schlitten (90) einen aus einem faserverstärktem Kunststoff hergestellten Schlittenkörper (92) umfasst.

16. Linearmotorantriebseinrichtung (88) nach einem der Ansprüche 13 bis 15, **dadurch gekennzeichnet, dass** das Führungsprofil (10) zumindest entlang eines Teils seiner Erstreckung entlang der Längsachse (12) von einem quer zu der Längsachse (12) wirksamen Abstützelement (106) abgestützt ist.

17. Linearmotorantriebseinrichtung (88) nach einem der Ansprüche 13 bis 15, **dadurch gekennzeichnet, dass** das Führungsprofil (10) freitragend angeordnet ist.
